# EUROPEAN PATENT APPLICATION

(11) **EP 1 950 332 A1**
(43) Date of publication of application: **30.07.2008**
(21) Application number: 08000508.5
(22) Date of filing: 11.01.2008
(51) Int. Cl.: D03C 1/00, D03D 49/22, D03D 39/22, F16H 21/20

(54) **Drive-amount changing mechanism in crank-type driver**

(30) Priority: 25.01.2007 JP 2007014387
(71) Applicant: TSUDAKOMA KOGYO KABUSHIKI KAISHA, Kanazawa-shi, Ishikawa-ken 921-8650 (JP)
(72) Inventor: Myogi, Keiichi, Kanazawa-shi Ishikawa-ken 921-8650 (JP)
(74) Representative: Samson & Partner

(57) **Abstract**

In a crank-type driver (20) that includes a first support member (22) having a drive shaft (34) fitted thereto and joined to the drive shaft in a non-rotatable fashion; a second support member (24) joined to the first support member in a non-rotatable fashion; an eccentric shaft (24a) supported by the second support member; and a linking member (26) rotatably supported by the second support member by means of the eccentric shaft and linked to a driven member (12a, 12b), the second support member joined to the first support member has two or more settable fixation positions with respect to the first support member, each fixation position being set as an angular position about an axis line (L1) of the drive shaft. An axis line (L2) of the eccentric shaft is located at an eccentric position relative to the axis line of the drive shaft at each fixation position, the eccentric position being different between the two or more settable fixation positions.

## Description

### BACKGROUND OF THE INVENTION

### 1. Field of the Invention

The present invention relates to drive-amount changing mechanisms in crank-type drivers, and particularly, to a drive-amount changing mechanism in a crank-type driver used in, for example, an easing device in a loom.

### 2. Description of the Related Art

In a typical loom, warp threads let off from a let-off beam are wound around a tension roller and are guided towards a cloth fell. A loom is generally equipped with an easing device that allows the tension roller to actively perform an easing operation for each cycle of the loom so as to alleviate tension fluctuation occurring in response to, for example, a shedding motion of the ward threads. Such an easing device includes, for example, a pair of left and right easing levers that support the opposite ends of the tension roller, driving means for reciprocating the easing levers in a rocking motion, and linking rods that link the driving means to the easing levers. As the driving means, a crank-type driver is generally used. Refer to an example disclosed in Japanese Unexamined Patent Application Publication No. 7-42046 which will be referred to as Patent Document 1 hereinafter.

In addition to such a crank-type driver used in an easing device described above, examples of crank-type drivers used in looms include a crank-type driver used in a shedding device in a loom (refer to an example disclosed in Japanese Unexamined Patent Application Publication No. 7-133545 which will be referred to as Patent Document 2 hereinafter) and a crank-type driver used in a terry motion mechanism in a pile loom (refer to an example disclosed in Japanese Unexamined Patent Application Publication No. 10-331054 which will be referred to as Patent Document 3 hereinafter) .

Regarding each of these devices equipped with the aforementioned crank-type drivers, when a loom undergoes a change in weaving conditions, there are cases where it is necessary to change the drive amounts for the driven members such as the tension roller (easing levers), the heald frame, and the terry motion mechanism. Patent Document 2 discloses a structure for changing a drive amount in a crank-type driver.

In Patent Document 2, a crank disc having a spiral groove is provided, and a link position of a linking member, which links the crank disc to a rocking lever, with respect to the crank disc is changeable along the groove. By changing the link position, an amount of eccentricity of the link position with respect to the central axis of the crank disc can be changed, thereby changing the amount of reciprocation of the linking member (i.e. the amount of reciprocation of a driven member).

However, in the crank-type driver disclosed in Patent Document 2, the drive amount of a driven member is adjustable in a non-stepwise manner. For this reason, the adjustment process for the drive amount is difficult and requires skill as well as being time consuming and troublesome. Specifically, in a case where the drive amount is adjustable in a non-stepwise manner, it is extremely difficult to reproduce various predetermined adjustment amounts for every adjustment process. In addition, as in the case of an easing device where the pair of left and right easing levers are the driven members, the drive amounts for the easing levers must be exactly the same. This makes the adjustment process extremely difficult.

### SUMMARY OF THE INVENTION

Accordingly, it is an object of the present invention to provide a drive-amount changing mechanism that allows for an easy drive-amount changing process in a device equipped with a crank-type driver as driving means.

The present invention is directed to a crank-type driver that includes a first support member having a drive shaft fitted thereto and joined to the drive shaft in a non-rotatable fashion; a second support member joined to the first support member in a non-rotatable fashion; an eccentric shaft supported by the second support member; and a linking member rotatably supported by the second support member by means of the eccentric shaft and linked to a driven member.

In order to solve the aforementioned problems, the present invention provides a drive-amount changing mechanism in the aforementioned crank-type driver, in which the second support member joined to the first support member has two or more settable fixation positions with respect to the first support member, each fixation position being set as an angular position about an axis line of the drive shaft. Moreover, an axis line of the eccentric shaft is located at an eccentric position relative to the axis line of the drive shaft at each fixation position of the second support member with respect to the first support member, the eccentric position of the axis line of the eccentric shaft relative to the axis line of the drive shaft being different between the two or more settable fixation positions.

In the present invention, at each angular position about the drive shaft for setting the corresponding fixation position, the second support member may be joined to the first support member in a movable manner in a direction of eccentricity of the axis line of the eccentric shaft with respect to the axis line of the drive shaft. Furthermore, one of the first support member and the second support member may have a pair of stoppers for stopping the movement of the second support member in the direction of eccentricity. Moreover, each fixation position may be set as a state where the other one of the first support member and the second support member is abutted against at least one of the stoppers.

Furthermore, the drive shaft may be rotatably supported by a base (frame) and may project from the base. Moreover, the second support member and the eccentric shaft may each have a through hole through which the drive shaft extends, the second support member and the eccentric shaft being disposed in a state where the drive shaft is fitted to the through holes. In addition, the first support member may be joined to the drive shaft at a location farther from the base relative to the second support member.

In the aforementioned crank-type driver, more specifically, a crank-type driver equipped with an eccentric shaft that converts a rotation of a drive shaft into a reciprocation of a driven member, the second support member that supports the eccentric shaft is joined to the first support member at each of two or more fixation positions set on the basis of predetermined angular positions. In addition, the distance (i.e. an amount of eccentricity) between the central axis of the eccentric shaft and the central axis of the drive shaft is set to be different between the two or more fixation positions. Accordingly, by setting each fixation position so that a desired eccentricity amount (drive amount) can be attained, the process for changing the drive amount for the driven member can be simplified. Specifically, the process simply involves selecting one of the two or more settable fixation positions that corresponds the desired drive amount (eccentricity amount) and then switching to that selected fixation position. Therefore, the process can be performed readily by any operator regardless of the level of skill of the operator.

Furthermore, as described above, at each angular position for setting the corresponding fixation position, the second support member may be joined to the first support member in a movable manner in the direction of eccentricity. In addition, one of the first support member and the second support member has the pair of stoppers for stopping the movement of the second support member in the direction of eccentricity. The first support member and the second support member are fixed to each other in a state where the other one of the first support member and the second support member is abutted against at least one of the stoppers. Thus, each angular position allows for two settable fixation positions, thereby expanding the adjustment range for the drive amount (eccentricity amount). In addition, the first support member and the second support member are fixed to each other while the two are positioned with respect to each other by having at least one of the stoppers provided on one of the two members being abutted against the other one of the two members. Accordingly, this process can be performed readily and accurately.

Furthermore, as described above, the drive shaft may be rotatably supported by the base by means of a bearing in a state where one end of the drive shaft projects from the base. In this case, the first support member may be joined to the drive shaft at a location farther from the base relative to the second support member. Thus, the process for changing the relative angular position between the first support member and the second support member for changing the fixation position of the second support member with respect to the first support member can be performed readily by detaching the first support member from the second support member and then reattaching the first support member onto the second support member. In addition, since the second support member with the driven member linked thereto is supported by the drive shaft at a location close to the base, the load applied to the drive shaft and the bearing supporting the drive shaft can be reduced, thereby preventing these components from being damaged.

### BRIEF DESCRIPTION OF THE DRAWINGS

Fig. 1 is a partial cross-sectional side view illustrating an embodiment of the present invention;
Fig. 2 is a front view showing the embodiment of the present invention;
Figs. 3A and 3B include front views and partial cross-sectional side views showing a relevant part of the embodiment of the present invention;
Figs. 4A and 4B are front views showing a relevant part of the embodiment of the present invention;
Fig. 5 is a front view showing a part of the embodiment of the present invention;
Fig. 6 is a perspective view illustrating an easing device to which the present invention is applied;
Figs. 7A to 7D are front views showing a relevant part of another embodiment of the present invention;
Figs. 8A and 8B are front views showing a relevant part of other embodiments of the present invention; and
Fig. 9 is a partial cross-sectional side view illustrating another embodiment of the present invention.

### DESCRIPTION OF THE PREFERRED EMBODIMENTS

Embodiments of the present invention will now be described with reference to the drawings.

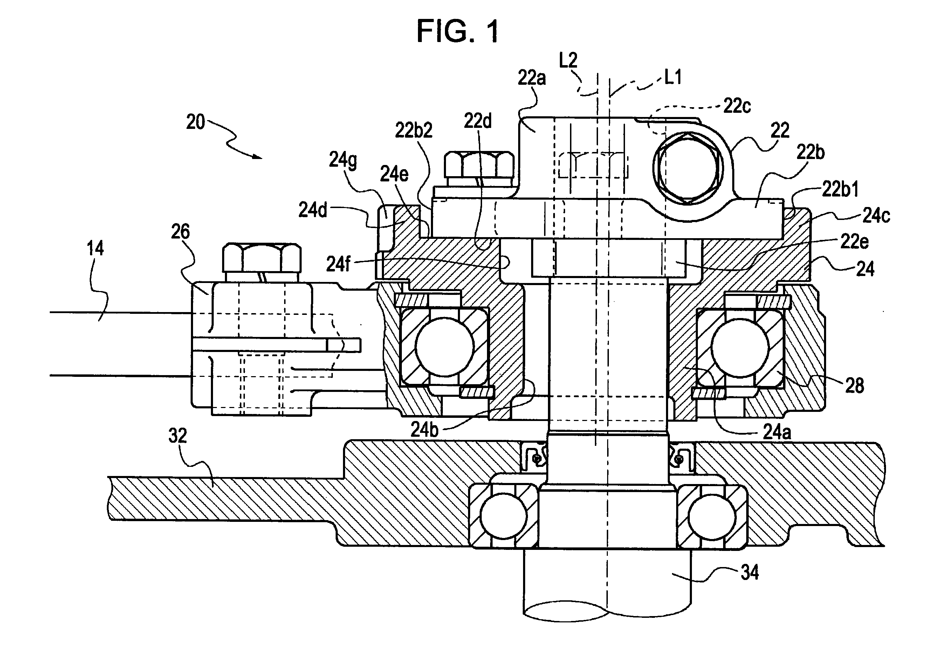

Figs. 1 to 6 illustrate an embodiment of the present invention, which is an example where the present invention is applied to an easing device of a loom.

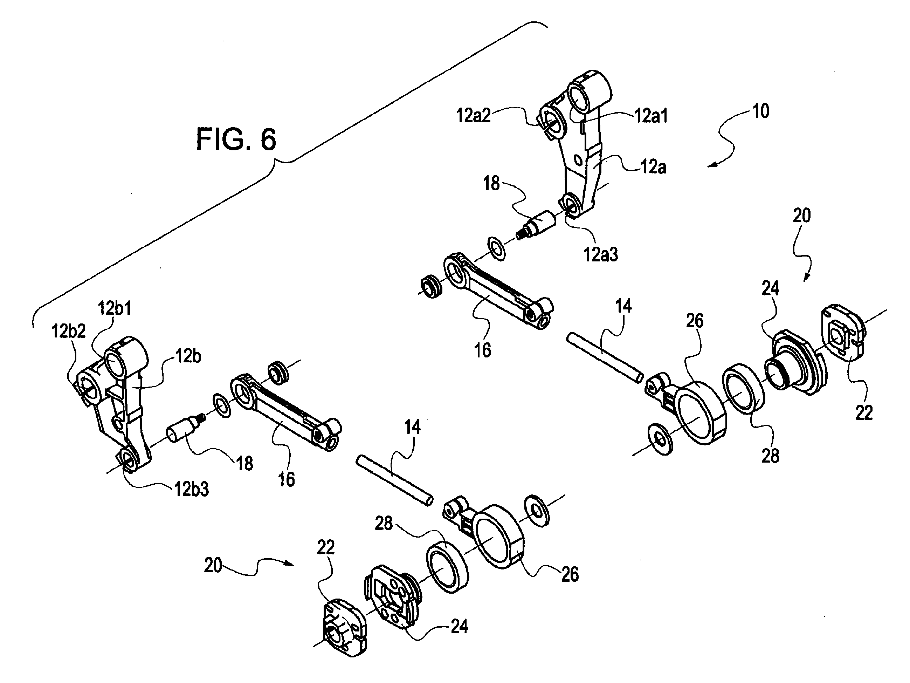

Fig. 6 schematically illustrates an easing device 10. The easing device 10 includes a pair of easing levers 12a and 12b (driven members) that support opposite ends of a tension roller (not shown) having warp threads wound therearound; crank-type drivers 20 and 20 (which will simply be referred to as "drivers" hereinafter) according to the present invention; and rods 14 and 14 and arms 16 and 16 that respectively link the easing levers 12a and 12b to the corresponding drivers 20 and 20.

The easing levers 12a and 12b respectively have support holes 12a1 and 12b1 at the upper ends thereof, and are rotatably supported by a frame of a loom by means of a support shaft (not shown) fitted to the support holes 12a1 and 12b1. The opposite ends of the tension roller have shaft portions that are securely fitted to support holes 12a2 and 12b2 provided at intermediate sections of the easing levers 12a and 12b. Thus, the tension roller is supported by the loom frame in a rockable fashion about the support holes 12a1 and 12b1 by means of the easing levers 12a and 12b.

At the lower ends of the easing levers 12a and 12b are also provided support holes 12a3 and 12b3 to which respective shaft members 18 and 18 are securely fitted. These shaft members 18 and 18 have the arms 16 and 16 rotatably connected thereto with, for example, bearings interposed therebetween. The arms 16 and 16 are respectively linked to the corresponding drivers 20 and 20 with the rods 14 and 14 interposed therebetween. In other words, the easing levers 12a and 12b that support the opposite ends of the tension roller are respectively linked to the corresponding drivers 20 and 20 by means of the shaft members 18 and 18, the arms 16 and 16, and the rods 14 and 14, and are driven rockably back and forth in a synchronous manner. This reciprocating rocking motion of the easing levers 12a and 12b allows the tension roller to actively perform an easing operation. Since the drivers 20 and 20 have the same configuration, the description hereinafter will be directed to only one of the drivers 20 and 20.

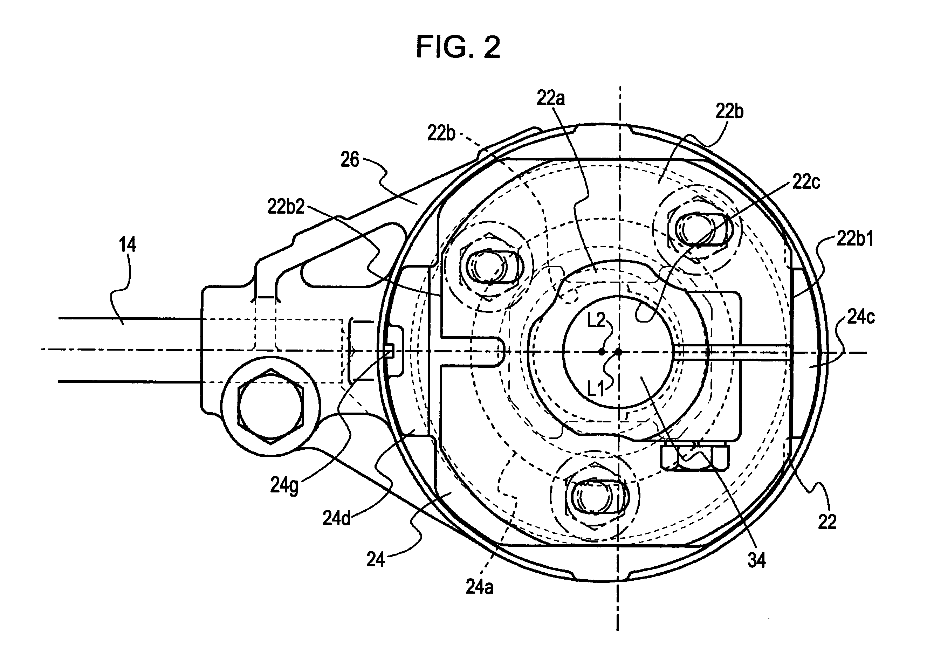

Referring to Figs. 1 and 2, the driver 20 includes a crank hub 22 serving as a first support member that is non-rotatably joined to an end of a drive shaft 34, a holder 24 serving as a second support member that is joined to the crank hub 22, and a linking member 26 that is rotatably supported by the holder 24. The drive shaft 34 is rotatably supported by a loom frame 32 by means of a bearing and has one end that projects from the loom frame 32. The drive shaft 34 is linked to a main shaft (not shown) of the loom by means of, for example, a drive transmission mechanism, and is rotated in synchronization with the main shaft.

In Figs. 1 and 2, the crank hub 22 is joined to the tip end of the drive shaft 34 that projects from the loom frame 32. In detail, the crank hub 22 has a through hole 22c extending in the axial direction of the drive shaft 34, and the crank hub 22 and the drive shaft 34 are combined together in a state where the tip end portion of the drive shaft 34 is fitted to this through hole 22c. Moreover, the crank hub 22 is securely clamped to the drive shaft 34 with a clamping mechanism provided at a shaft portion 22a of the crank hub 22. Thus, the crank hub 22 is joined to the drive shaft 34 in a manner such that the phase of the crank hub 22 is freely adjustable with respect to the drive shaft 34. The position for securing the crank hub 22 to the drive shaft 34 is not limited to the tip end portion of the drive shaft 34. For example, other members (such as a rotation detector) more distant from the loom frame 32 relative to the crank hub 22 may be attached to the drive shaft 34.

The holder 24 is abutted against an end surface 22d, proximate to the loom frame 32, of a flange portion 22b of the crank hub 22. In this state, the holder 24 is joined to the crank hub 22 by means of a plurality of screw members (three screw members in Figs. 1 and 2) that are screwed in from the side of the crank hub 22. In the present embodiment, the holder 24 integrally has an eccentric shaft portion 24a that corresponds to an eccentric shaft according to the present invention. The holder 24 including the eccentric shaft portion 24a has a through hole 24b through which the drive shaft 34 extends.

As shown in Figs. 1 and 2, the holder 24 has a cutout 24g at one periphery section thereof. As will be described hereinafter, this cutout 24g serves as an indicator for the direction of eccentricity. The term "direction of eccentricity" refers to a direction in which the central axis of the eccentric shaft portion 24a is eccentric to the center of the through hole 22c in the crank hub 22 (i.e. the central axis of the drive shaft 34). A direction of a line that connects the central axis of the eccentric shaft portion 24a to the center of the cutout 24g, that is, a line extending through the center of the through hole 22c in a direction parallel to the direction of eccentricity, will be referred to as "first direction" hereinafter. The dimension of the through hole 24b in the first direction is greater than the diameter of the drive shaft 34. Consequently, in a state where the drive shaft 34 is fitted to the through hole 24b, the drive shaft 34 is permitted to move in the first direction.

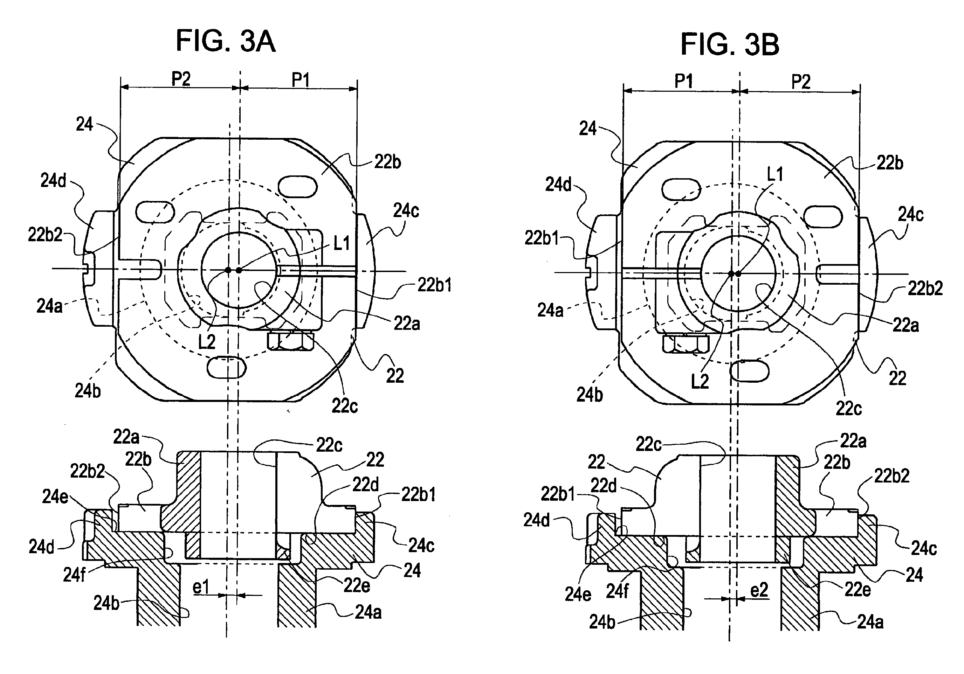

The linking member 26 is linked to the easing lever 12a (12b) by means of the rod 14, etc., and is concentrically engaged to the eccentric shaft portion 24a of the holder 24 with a bearing 28 therebetween, whereby the linking member 26 is rotatably supported by the holder 24. The linking member 26 and the holder 24 including the eccentric shaft portion 24a constitute a crank unit. Furthermore, as shown in Figs. 1 and 2, in a state where the driver 20 is combined with the drive shaft 34, the holder 24 is joined to the crank hub 22 with a central axis L2 of the eccentric shaft portion 24a being eccentric to a central axis L1 of the drive shaft 34 (i.e. the center line of the through hole 22c). In the state shown in Fig. 1, the central axis L2 is eccentric to the central axis L1 by an eccentricity amount e1 (see Fig. 3A).

In the above-described driver 20, an amount of reciprocation of the easing lever 12a (12b) depends on this eccentricity amount. Based on the angular relationship the crank hub 22 has with the rotational phase of the drive shaft 34, the timing at which the linked section between the easing lever 12a (12b) and the arm 16 reaches the rocking limit point farthest from the driver 20, namely, the timing at which the easing lever 12a (12b) in reciprocal rocking motion reaches the top dead center is determined. In a state where the easing lever 12a (12b) is at the top dead center, a line that connects the central axis L1 of the drive shaft 34 and the central axis L2 of the eccentric shaft portion 24a is aligned with a line that connects the central axis L2 of the eccentric shaft portion 24a and the center of the linked section between the easing lever 12a (12b) and the arm 16. In other words, the direction of eccentricity is aligned with the extending direction of the rod 14 and the arm 16.

Consequently, in the state where the holder 24 is joined to the crank hub 22, the angular relationship the crank hub 22 has with the drive shaft 34 can be adjusted so as to set at which rotational phase in one rotation of the drive shaft 34 the easing lever 12a (12b) serving as a driven member reaches the top dead center. Thus, in relation to operations of other devices in the loom (such as a shedding device), the crank hub 22 can be joined to the drive shaft 34 in a manner such that the direction of eccentricity is aligned with the extending direction of the rod 14 at a rotational phase of the drive shaft 34 that corresponds to the rotational angle of the loom main shaft at which the easing lever 12a (12b) reaches the top dead center. This allows the tension roller to perform a desired easing operation.

Referring to Figs. 1 and 2, the holder 24 has a surface 24e that abuts against the end surface 22d of the flange portion 22b of the crank hub 22. The holder 24 is provided with a pair of stoppers 24c and 24d that project towards the crank hub 22 from the surface 24e. The stoppers 24c and 24d are provided at positions where they sandwich the crank hub 22 in the first direction. The crank hub 22 (i.e. the flange portion 22b) has edge surfaces 22b1 and 22b2 opposite to each other in the first direction, which are parallel to surfaces of the stoppers 24c and 24d that face the flange portion 22b. In the state shown in Figs. 1 and 2, the holder 24 is joined to the crank hub 22 with the edge surface 22b1 of the crank hub 22 and the stopper 24c being abutted against each other. The holder 24 is fixed to the crank hub 22 by inserting screw members through perforated holes formed in the crank hub 22 and then screwing the screw members into screw holes formed in the holder 24.

Referring to Figs. 3A and 3B, in the present embodiment, the fixation position of the holder 24 with respect to the crank hub 22 is set by positioning therebetween on the basis of abutment between the stopper 24c of the holder 24 and the edge surface 22b1 or 22b2 of the crank hub 22. Furthermore, the screw holes formed in the holder 24 that are used for fixing the holder 24 to the crank hub 22 are provided at positions corresponding to the perforated holes of the crank hub 22 in a fixation position shown in Fig. 3A and at positions corresponding to the perforated holes of the crank hub 22 in a fixation position shown in Fig. 3B. More specifically, in the example shown in the drawings, the fixation position of the holder 24 with respect to the crank hub 22 is set on the basis of the abutment between the flange portion 22b of the crank hub 22 and the stopper 24c of the holder 24 and the positional relationship between the perforated holes in the crank hub 22 and the screw holes in the holder 24. The holder 24 can only be joined to the crank hub 22 at these settable fixation positions.

The crank hub 22 also has a guide portion 22e that projects from the end surface 22d proximate to the loom frame 32. On the other hand, the holder 24 has a recess 24f at the upper end of the through hole 24b so as to receive the guide portion 22e. The guide portion 22e of the crank hub 22 has side surfaces opposite to each other in a direction perpendicular to the first direction (which will be referred to as "second direction" hereinafter). These opposite side surfaces extend parallel to the first direction at each of the aforementioned fixation positions. The recess 24f of the holder 24 has inner surfaces that face each other in the second direction. The inner surfaces of the recess 24f are parallel to the opposite side surfaces of the guide portion 22e of the crank hub 22 and are slidable against these opposite side surfaces so that the recess 24f can receive the guide portion 22e. In the example shown in the drawings, the recess 24f is formed such that the center line thereof viewed in the second direction extends through the center of the eccentric shaft portion 24a and is positioned on the line extending in the first direction.

Accordingly, when the crank hub 22 and the holder 24 are combined, the relative angular position between the crank hub 22 and the holder 24 is regulated due to the engagement between the guide portion 22e of the crank hub 22 and the recess 24f of the holder 24. Consequently, an angular position for setting one of the aforementioned fixation positions can be defined.

If Fig. 3A shows a fixation position where the angular position is in alignment with the direction of eccentricity and is 0°, Fig. 3B shows a state where the relative angular position between the crank hub 22 and the holder 24 differs from that in Fig. 3A by 180°. Therefore, Fig. 3B corresponds to a fixation position where the angular position is 180°. The angular position is set as a rotational angle about the central axis of the drive shaft 34 and is relative between the crank hub 22 and the holder 24. As mentioned above, a fixation position of the holder 24 with respect to the crank hub 22 is defined by such an angular position.

Referring to Fig. 3A, the flange portion 22b of the crank hub 22 is formed such that a distance P1 between the center of the through hole 22c and the edge surface 22b1 is different from a distance P2 between the center of the through hole 22c and the edge surface 22b2 (P2 > P1 in Fig. 3A). Consequently, by changing the relative angular position between the crank hub 22 and the holder 24 by 180° from the state of fixation position with 0° angular position shown in Fig. 3A, a fixation position with 180° angular position shown in Fig. 3B is attained. As a result, the eccentricity amount e1 shown in Fig. 3A is changed to an eccentricity amount e2 (< e1).

Accordingly, in Figs. 3A and 3B, regarding the fixation of the holder 24 with respect to the crank hub 22, fixation positions at the two aforementioned angular positions (0° and 180°) are set. In addition, at each of the fixation positions, the edge surface 22b1 or 22b2 of the crank hub 22 and the stopper 24c of the holder 24 are abutted against each other so that the holder 24 is positioned with respect to the crank hub 22. Moreover, the eccentricity amount of the central axis L2 of the eccentric shaft portion 24a with respect to the central axis L1 of the drive shaft 34 is different between the two fixation positions.

Consequently, the process for changing the drive amount by the driver 20 (i.e. the eccentricity amount of the eccentric shaft portion 24a) simply involves selecting one of the settable fixation positions (angular positions) and fixing the crank hub 22 and the holder 24 together with the holder 24 being positioned with respect to the crank hub 22 (with the flange portion 22b of the crank hub 22 being abutted against the stopper 24c of the holder 24). This process can thus be performed readily and accurately regardless of the level of skill of the operator.

As mentioned above, the angular position of the holder 24 with respect to the crank hub 22 in the present invention is relative between the crank hub 22 and the holder 24. Therefore, when performing the process for changing the fixation position (angular position) of the holder 24 with respect to the crank hub 22, the angular relationship the holder 24 has with the drive shaft 34 may be changed while maintaining the angular relationship the crank hub 22 has with the drive shaft 34, or the relative angular position between the crank hub 22 and the holder 24 may be changed by rotating the crank hub 22 around the drive shaft 34 while maintaining the angular relationship the holder 24 has with the drive shaft 34.

In the present embodiment, the holder 24 is movable with respect to the crank hub 22 in the first direction at each of the angular positions for setting the aforementioned fixation positions. In detail, the distance between the stoppers 24c and 24d of the holder 24 is greater than the distance between the edge surfaces 22b1 and 22b2 of the crank hub 22, and the dimension of the recess 24f of the holder 24 in the first direction is greater than the dimension of the guide portion 22e of the crank hub 22 in the first direction, whereby relative movement is permitted between the crank hub 22 and the holder 24.

Accordingly, by releasing the fixation force between the crank hub 22 and the holder 24 at each angular position for setting the corresponding fixation position, the holder 24 becomes movable with respect to the crank hub 22 in a direction opposite to the direction of eccentricity from the state shown in Fig. 1 where the edge surface 22b1 of the crank hub 22 and the stopper 24c of the holder 24 are abutted against each other. This movement in the direction opposite to the direction of eccentricity is stopped when the edge surface 22b2 of the crank hub 22 and the stopper 24d of the holder 24 abut against each other. In other words, the holder 24 can be positioned with respect to the crank hub 22 at two predetermined positions at each angular position. The guide portion 22e of the crank hub 22 is guided along the inner surfaces of the recess 24f in the holder 24 that face each other in the second direction, so that the relative movement between the crank hub 22 and the holder 24 is permitted only in the first direction.

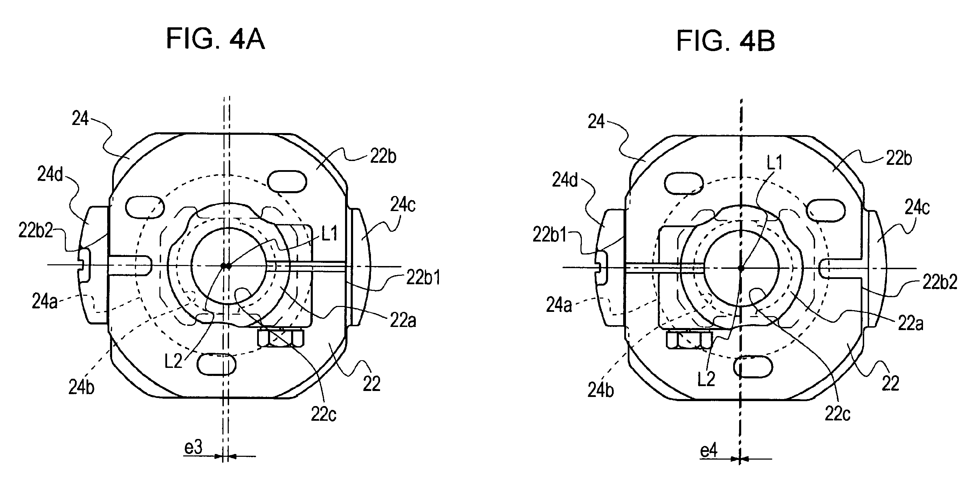

In the driver 20 according to the present embodiment, two predetermined fixation positions are set for each of the angular positions, which means that there is a total of four settable fixation positions for the driver 20. In detail, the four fixation positions include the 0° angular position shown in Fig. 3A where the edge surface 22b1 of the crank hub 22 and the stopper 24c of the holder 24 are abutted against each other, the 180° angular position shown in Fig. 3B where the edge surface 22b2 of the crank hub 22 and the stopper 24c of the holder 24 are abutted against each other, a 0° angular position shown in Fig. 4A where the edge surface 22b2 of the crank hub 22 and the stopper 24d of the holder 24 are abutted against each other, and a 180° angular position shown in Fig. 4B where the edge surface 22b1 of the crank hub 22 and the stopper 24d of the holder 24 are abutted against each other. Every one of these fixation positions is set in accordance with the abutment between one of the edge surfaces of the crank hub 22 and the holder 24 relatively movable only in the first direction. Therefore, each fixation position can be re-attained readily by performing the process for changing the drive amount (fixation position).

The movable distance of the holder 24 with respect to the crank hub 22 is determined on the basis of the relationship between the dimension between the edge surfaces 22b1 and 22b2 of the crank hub 22 and the distance between the stoppers 24c and 24d of the holder 24. Consequently, by appropriately setting this movable distance and the relationship between the dimension (distance) between the center of the through hole 22c in the flange portion 22b of the crank hub 22 and the edge surface 22b1 and the dimension (distance) between the center of the through hole 22c and the edge surface 22b2, the eccentricity amount of the central axis L2 of the eccentric shaft portion 24a with respect to the central axis L1 of the drive shaft 34 can be made variable. In this case, four kinds of eccentricity amounts can be attained. In the present embodiment, the eccentricity amount in the state shown in Fig. 4A is e3 (< e2), and the eccentricity amount in the state shown in Fig. 4B is e4 (< e3).

With the setting technique of the eccentricity amount in the above-described manner, it is possible to set the smallest eccentricity amount e4 to zero. Specifically, in a driver where a plurality of drive amounts (eccentricity amounts) can be set, it is possible to obtain a state where the eccentricity amount is zero.

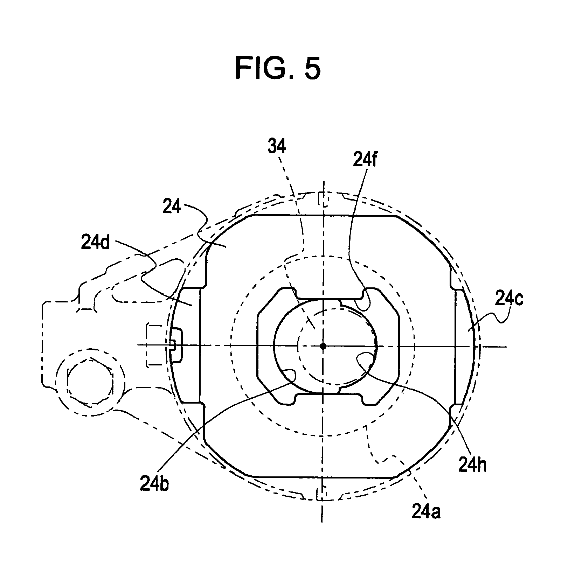

In the driver 20 of the present embodiment described above, the driver 20 also has the following features.
1. The direction of eccentricity with respect to the holder 24 is the same (constant) among all the fixation positions. In other words, at every one of the four settable fixation positions, the holder 24 is joined to the crank hub 22 such that the direction in which the central axis of the eccentric shaft portion 24a of the holder 24 is eccentric to the center of the through hole 22c of the crank hub 22 is oriented towards a predetermined position of the holder 24.
   Specifically, referring to Figs. 3A and 3B, the distance P1 between the through hole 22c of the crank hub 22 and the edge surface 22b1 and the distance P2 between the through hole 22c and the edge surface 22b2 are both set to be smaller than the distance between the surface of the stopper 24c of the holder 24 abutted against the crank hub 22 and the central axis of the eccentric shaft portion 24a. Accordingly, the direction of eccentricity is the same between the two fixation positions at the 0° angular position and the 180° angular position respectively shown in Figs. 3A and 3B. In addition, when one fixation position shown in each of Figs. 3A and 3B is to be changed to the other fixation position by moving the holder 24 relative to the crank hub 22 in the direction opposite to the direction of eccentricity, the movable distance of the holder 24 is set to be smaller than the eccentricity amount at the one fixation position. In other words, the distances P1 and P2 are both set to be greater than the distance between the surface of the stopper 24d of the holder 24 to be abutted against the crank hub 22 and the central axis of the eccentric shaft portion 24a. Consequently, at each angular position, the direction of eccentricity with respect to the holder 24 is maintained in the same direction even upon relative movement between the crank hub 22 and the holder 24 in the first direction. Therefore, even in the case of the easing device 10 where a timing is set in relation to other devices in the loom (such as a shedding device), the present invention can be readily applied.
2. In the state where the crank hub 22 and the holder 24 are combined, an indicator is provided at a position corresponding to the direction of eccentricity. In the example shown in the drawings, the indicator is defined by the cutout 24g formed in the holder 24. Therefore, even after the process for changing the angular position of the holder 24 with respect to the crank hub 22 is implemented, the direction of eccentricity can be held constant readily with respect to the driver 20.
   Accordingly, the direction of eccentricity with respect to the holder 24 is held constant even after a change in angular position (fixation position). Thus, the indicator provided at a position corresponding to the direction of eccentricity can be used as a reference for an angular position when the crank hub 22 is to be joined to the drive shaft 34.
   Specifically, in order to change the angular position, it is necessary to release the fixed state between the crank hub 22 and the holder 24 and to release the fixed state between the crank hub 22 and the drive shaft 34 so as to disengage the guide portion 22e and the recess 24f from each other. In this released state, the angular relationship between the crank hub 22 and the drive shaft 34 is lost, and the holder 24 is rotatable with respect to the drive shaft 34. Although the relative angular position between the crank hub 22 and the holder 24 can be set readily by combining the two together, it is difficult to join the crank hub 22 to the drive shaft 34 to attain the same angular relationship as that prior to the change in angular position. With the cutout 24g serving as the indicator, the crank hub 22 is joined to the drive shaft 34 so that the cutout 24g is located at the same position as that prior to the change in angular position. Consequently, in correlation with the fact that the direction of eccentricity is constant among the fixation positions, the direction of eccentricity with respect to the drive shaft 34 (the driver 20) can be made the same as that prior to the change in angular position.
   Specifically, when the angular position is to be changed, the loom is stopped in a state where the cutout 24g of the holder 24 is aligned with the extending direction of the rod 14, namely, a state where the easing lever 12a (12b) is at the top dead center. The process for changing the angular position is then started. After changing the angular position of the holder 24 with respect to the crank hub 22 and combining the two together, the cutout 24g is aligned with the extending direction of the rod 14. In this aligned state, the crank hub 22 is fixed to the drive shaft 34. Thus, the direction of eccentricity with respect to the driver 20 can be made the same as that prior to the change in angular position.
   The indicator described above is not limited to the cutout 24g as shown in the drawings, and may be of any kind that is capable of functioning as a reference. Furthermore, although the indicator (i.e. the cutout 24g) is positioned so that its position is aligned with the extending direction of the rod 14 in the above description, a similar indicator may additionally be provided on the linking member 26 at a position that corresponds to the aforementioned indicator. In that case, the positioning is implemented by aligning the two indicators with each other.
3. The holder 24 is joined to the crank hub 22 so as to be located closer to the loom frame 32 relative to the crank hub 22. This facilitates the process for changing the angular position of the holder 24 with respect to the crank hub 22.
   Specifically, because the linking member 26 is disposed farther from the crank hub 22 relative to the holder 24, the holder 24 can be joined to the crank hub 22 by inserting screw members from the side of the crank hub 22. If the crank hub 22 is disposed closer to the loom frame 32 relative to the holder 24, the head portions of the screw members will be positioned between the crank hub 22 and the loom frame 32. This structure makes it difficult to manipulate the screw members. In contrast, with the structure according to the present embodiment, the screw members used for fixing the crank hub 22 and the holder 24 together are exposed at the side of the crank hub 22 farthest from the loom frame 32, whereby the screw members can be manipulated readily. This facilitates the process for releasing the fixed state between the holder 24 and the crank hub 22 when the fixed position of the holder 24 with respect to the crank hub 22 is to be changed.
   In the case where the relative angular position between the crank hub 22 and the holder 24 is defined by the engagement between the guide portion 22e of the crank hub 22 and the recess 24f of the holder 24 as described above, it is necessary to release the engagement state in order to change the angular position. Normally, a component positioned distant from the loom frame 32 is moved in the axial direction of the drive shaft 34 to release the engagement state. However, if that component is the holder 24, that is, if the holder 24 is joined to the crank hub 22 at a location farther from the loom frame 32 relative to the crank hub 22, the link components such as the rod 14 and the arm 16 linked to the holder 24 with the linking member 26 therebetween will need to be detached from the linking member 26 in order to move the holder 24 in the axial direction of the drive shaft 34. With such a structure where the holder 24 is joined to the crank hub 22 at a location farther from the loom frame 32 relative to the crank hub 22, the process for changing the relative angular position between the crank hub 22 and the holder 24 involves detaching the link components linked to the tension roller, which is a heavy component, from the linking member and then reattaching the link components to the linking member. The process is thus troublesome and complicated.
   In contrast, according to the present embodiment, the holder 24 is joined to the crank hub 22 at a location closer to the loom frame 32 relative to the crank hub 22, or in other words, the crank hub 22 is located farther from the loom frame 32 relative to the holder 24. With this structure, the process for changing the relative angular position between the crank hub 22 and the holder 24 simply involves manipulating the crank hub 22 without having to move the holder 24, thereby achieving an easier process.
4. Referring to Fig. 5, the through hole 24b of the holder 24 has an arc surface 24h that is used for guiding the drive shaft 34 when changing the fixation position of the holder 24 with respect to the crank hub 22.

In view of machining accuracy, forming the through hole 24b in the holder 24 while aligning the center line of the through hole 24b in the second direction with the center line of the recess 24f in the second direction is difficult. In other words, it is difficult to form the through hole 24b so that the center line of the through hole 24b in the second direction can coincide with the central axis of the drive shaft 34 when the crank hub 22 is joined thereto. Therefore, the diameter of the through hole 24b in the second direction is made larger than the diameter of the drive shaft 34. This is due to the following reason. Assuming that the through hole 24b is given a diameter in the second direction that allows the drive shaft 34 to be fitted exactly therein, when the relative angular position between the crank hub 22 and the holder 24 is to be changed, it will not be possible to engage the guide portion 22e and the recess 24f with each other in the state where the crank hub 22 is joined to the drive shaft 34, unless the center line of the through hole 24b in the second direction and the center of the recess 24f are precisely aligned with each other.

In the above-mentioned case where the diameter of the through hole 24b in the second direction is made larger than the diameter of the drive shaft 34, the holder 24 can take a free position with respect to the drive shaft 34 upon releasing of the fixed state between the crank hub 22 and the holder 24. In other words, the center line of the through hole 24b becomes non-aligned with the central axis of the drive shaft 34. As a result, in a state where the drive shaft 34 is fitted to the through hole 22c of the crank hub 22, even if one tries to fit the guide portion 22e of the crank hub 22 into the recess 24f of the holder 24 in order to combine the crank hub 22 and the holder 24 together, the process cannot be performed smoothly.

In order to solve this problem, the inner wall of the through hole 24b in the holder 24 is partially provided with an arc surface 24h at a section facing the first direction. Specifically, the arc surface 24h is formed such that the center thereof is positioned on the center line of the recess 24f in the second direction. According to this structure, an external force can be imparted on the holder 24 via the linking member 26 in a direction for pressing the arc surface 24h against the drive shaft 34 (such as the tension of the warp threads acting on the holder 24 via the rod 14, etc. and/or the weight of the driven members). Thus, the arc surface 24h guides the drive shaft 34 so that the central axis thereof can be positioned on a line extending in the first direction through the center of the arc surface 24h, namely, the center line of the recess 24f in the second direction. Consequently, this facilitates the process for engaging the guide portion 22e of the crank hub 22 to the recess 24f of the holder 24 in a state where the drive shaft 34 is fitted to the through hole 22c of the crank hub 22.

In order to guide the drive shaft 34, the arc surface 24h has an arc with a central angle of 180° or less and with a radius that is slightly larger than the radius of the drive shaft 34. A surface for guiding the drive shaft 34 in the above-described manner is not limited to an arc surface, and may be defined by, for example, two surfaces that converge towards the center line of the recess 24f in the second direction from the inner surfaces of the recess 24f that face each other in the second direction.

In the above description, an external force acting in the direction for pressing the arc surface 24h against the drive shaft 34 is utilized in order to guide the central axis of the drive shaft 34 onto the center line of the recess 24f in the second direction. As an alternative to the utilization of such an external force, a similar effect can be achieved with the weight of the holder 24 itself and the weight of the linking member 26 itself joined to the holder 24 with the bearing. Specifically, in a state where the guide portion 22e of the crank hub 22 and the recess 24f of the holder 24 are disengaged, a downward force acts on the holder 24 due to its own weight, but the holder 24 is supported by the drive shaft 34 fitted to the through hole 24b. In this state, the holder 24 is rotated gradually until the arc surface 24h is oriented in the direction opposite to the direction of the weight of the holder 24. Finally, the central axis of the drive shaft 34 is guided by the arc surface 24h onto the center line of the recess 24f in the second direction. In view of the stability of the holder 24 when supported by the drive shaft 34 with relation to the center of mass of the holder 24, the arc surface 24h is preferably provided at an inner wall that faces the direction opposite to the direction of eccentricity as shown in Fig. 5, instead of an inner wall of the recess 24f that faces the direction of eccentricity.

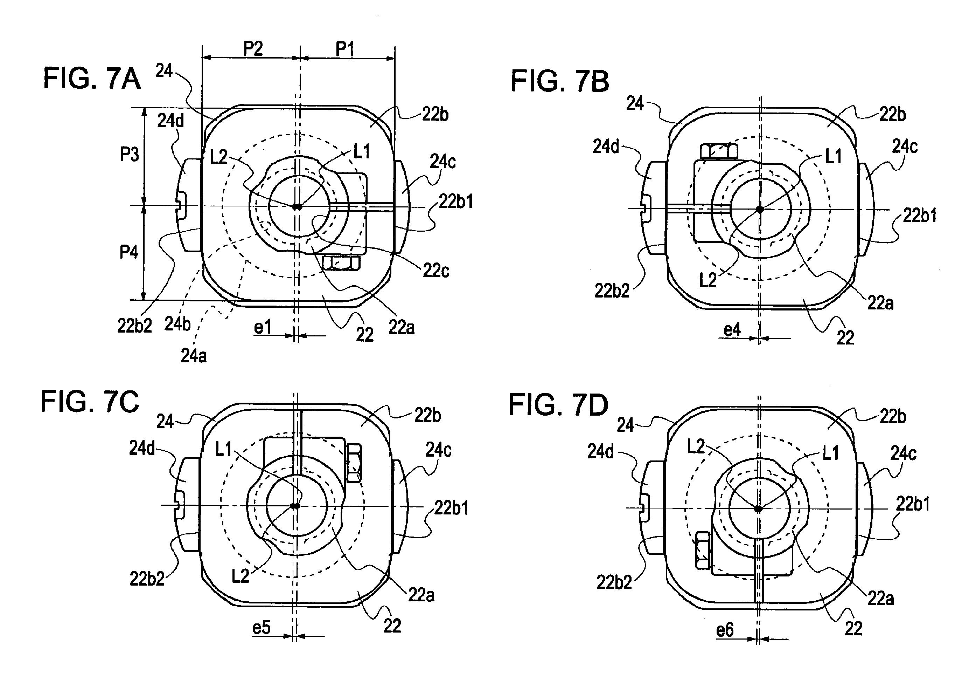

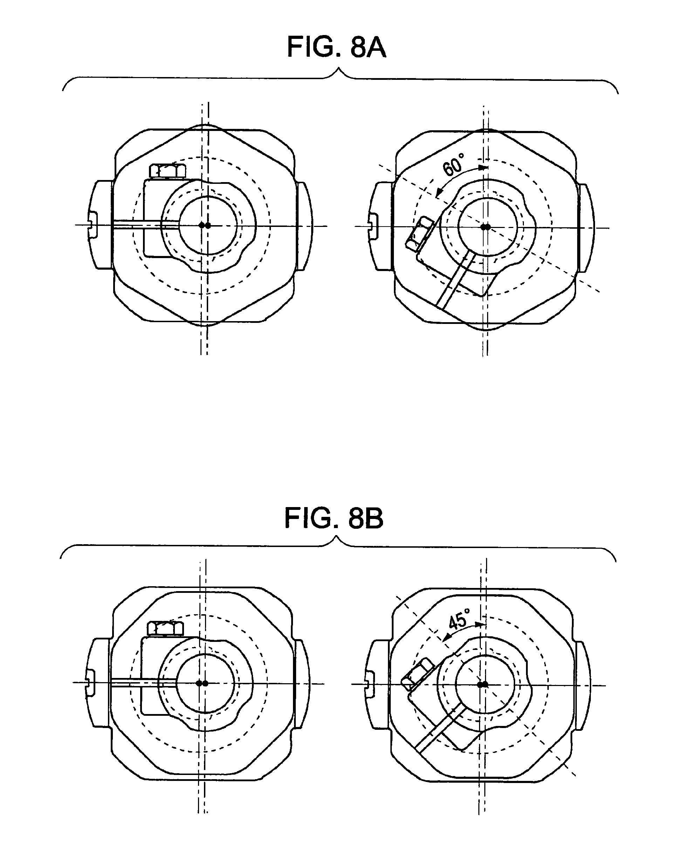

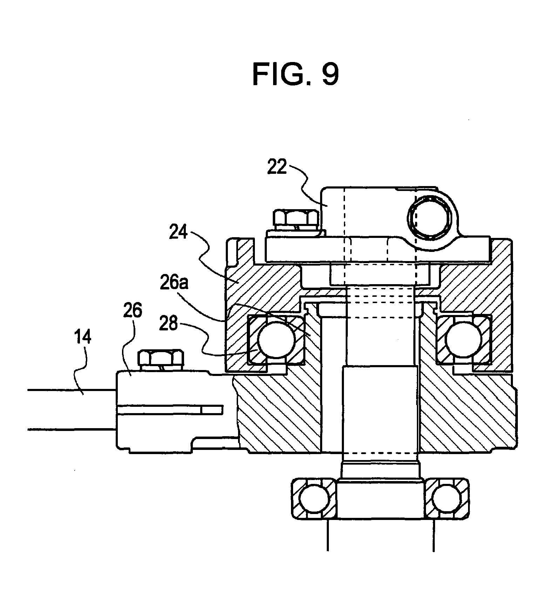

With regard to the embodiment described above, alternative embodiments of the present invention may be applied as described below.
1. In the above embodiment, the angular position of the holder 24 with respect to the crank hub 22 is defined on the basis of the abutment between the edge surface 22b1 or 22b2 of the crank hub 22 in the first direction and the stopper 24c or 24d of the holder 24 and the engagement between the guide portion 22e of the crank hub 22 and the recess 24f of the holder 24. Alternatively, the guide portion 22e and the recess 24f may be omitted. As a further alternative, the stoppers 24c and 24d of the holder 24 may be omitted. In that case, the guide portion 22e and the recess 24f can be used for defining the angular position and for setting a fixation position.
   In the above embodiment, the holder 24 is larger in size in the first direction than the crank hub 22 so that the holder 24 can have the stoppers 24c and 24d. Alternatively, the crank hub 22 may be formed larger in the first direction than the holder 24. In that case, the stoppers may be provided on the crank hub 22.
2. In the above embodiment, the holder 24 is movable with respect to the crank hub 22 in the first direction at each of the set angular positions (0° and 180°), such that each angular position allows for two settable fixation positions. However, the present invention is not limited to this configuration. Referring to Figs. 7A to 7D, the edge surfaces 22b1 and 22b2 of the crank hub 22 and the stoppers 24c and 24d of the holder 24 may respectively be abutted against each other at each angular position, such that each angular position allows for only one settable fixation position.
3. In the above embodiment, the relative angular position between the crank hub 22 and the holder 24 and the fixation position at the corresponding angular position are defined on the basis of the abutment between the edge surface 22b1 or 22b2 of the crank hub 22 and the stopper 24c or 24d of the holder 24 and the engagement between the guide portion 22e of the crank hub 22 and the recess 24f of the holder 24. Alternatively, one of the crank hub 22 and the holder 24 may be provided with a plurality of projections (such as positioning pins) projecting towards the other one of the crank hub 22 and the holder 24, and the other one may be provided with holes at positions corresponding to the projections. In that case, the projections are fitted to the holes so as to define the angular position and the fixation position between the crank hub 22 and the holder 24. In addition, these holes may be elongated in the first direction so that the crank hub 22 and the holder 24 can be relatively movable in the first direction.
4. In the above embodiment, the relationship between the eccentricity amount and the movable distance is set such that the direction of eccentricity with respect to the holder 24 is the same among all the four settable fixation positions. However, the present invention is not limited to this configuration. The relationship between the eccentricity amount and the movable distance may be set such that when the fixation position is changed to cause a change in eccentricity amount, the direction of eccentricity becomes opposite to that prior to the change in fixation position (namely, becomes inverted by 180°). In that case, however, the timing at which the crank unit reaches the top dead center changes by 180° for the rotational angle of the main shaft. For this reason, an adjustment is required after the change in eccentricity amount. This adjustment may be implemented by changing the phase relationship between the drive shaft 34 and the crank hub 22 by 180° after the crank hub 22 and the holder 24 are combined at the changed fixation position. Although such an adjustment is required, the process for changing the eccentricity amount can be performed more accurately in comparison to the related art.
5. In the above embodiment, the angular position for setting a fixation position includes a 0° angular position corresponding to the direction of eccentricity, i.e. in alignment with the direction of eccentricity, and a 180° angular position that is rotated by 180° from the 0° angular position. However, the present invention is not limited to such a configuration. For example, as shown in Figs. 7A to 7D, an angular position may be set for every rotational angle of 90° on the basis of the 0° angular position.
   In Figs. 7A to 7D, the distance from the center of the through hole 22c in the crank hub 22 to the edge surface 22b1 and the distance from the center of the through hole 22c to the edge surface 22b2 are respectively indicated by P1 and P2, as in the above embodiment. The crank hub 22 also has edge surfaces 22b3 and 22b4 that are opposite to each other in a direction orthogonal to the direction of eccentricity. In Figs. 7A to 7D, the distance from the edge surface 22b3 to the center of the through hole 22c and the distance from the edge surface 22b4 to the center of the through hole 22c are respectively indicated by P3 and P4. These distances have the following relationship: P2 > P3 > P4 > P1. Fig. 7A illustrates a fixation position at 0° angular position, and in this state, the central axis L2 of the eccentric shaft portion 24a is eccentric to the central axis L1 of the drive shaft 34 by an eccentricity amount e1, as in the state shown in Fig. 3A of the above embodiment. Fig. 7B illustrates a fixation position at 180° angular position, and in this state, the eccentricity amount is e4, as in the state shown in Fig. 4B of the above embodiment.
   Fig. 7C illustrates a fixation position at 90° angular position, and in this state, the eccentricity amount is e5 (e1 > e5 > e4). The eccentricity amount e5 is determined on the basis of the distance P3 and the distance from the central axis L2 of the eccentric shaft portion 24a to the abutment surface of the stopper 24c or on the basis of the distance P4 and the distance from the central axis L2 of the eccentric shaft portion 24a to the abutment surface of the stopper 24d. Similarly, Fig. 7D illustrates a fixation position at 270° angular position, and in this state, the eccentricity amount is e6 (e5 > e6> e4).
   In Figs. 7A to 7D, the distances P1 to P4 and the mounting positions of the holder 24 with respect to the crank hub 22 for the corresponding fixation positions are set so that the direction of eccentricity does not change even upon a change in angular position (fixation position). In this regard, however, even if the direction of eccentricity does change in response to a change in fixation position, the timing can still be adjusted as described above. Therefore, the present invention is not limited to the configuration shown in Figs. 7A to 7D.
   Furthermore, the angular position for setting a fixation position is not limited to 0° and 180° angular positions as in the above embodiment or angular positions settable at 90° intervals as in Figs. 7A to 7D. For example, the angular position may include angular positions settable at 60° intervals as shown in Fig. 8A or angular positions settable at 45° intervals as shown in Fig. 8B. However, an excessive number of angular positions will complicate the setting for fixation positions. Therefore, the number of angular positions is preferably within a range that allows for easy setting for fixation positions (for example, angular positions at 45° intervals) in relation to the mounting positions.
   Furthermore, although each of the angular positions in Figs. 7A to 7D allows for only one settable fixation position, the crank hub 22 and the holder 24 may be made relatively movable in the direction of eccentricity at each angular position as in the above embodiment so that each angular position allows for two settable fixation positions.
6. In the above embodiment, the eccentric shaft according to the present invention is defined by the eccentric shaft portion 24a integrated with the holder 24. Alternatively, referring to Fig. 9, the eccentric shaft according to the present invention may be defined by an eccentric shaft portion 26a integrated with the linking member 26. As a further alternative, the eccentric shaft may be defined by a component independent of the holder 24 and the linking member 26, and the component may be fixed to the holder 24 or the linking member 26. Furthermore, although the stoppers for stopping the relative movement between the crank hub 22 and the holder 24 in the direction of eccentricity are provided on the holder 24 in the above embodiment, the stoppers may alternatively be provided on the crank hub 22.

The technical scope of the present invention is not limited to the above embodiments, and modifications are permissible without departing from the scope of the claimed invention.

## Claims

1. A drive-amount changing mechanism in a crank-type driver (20) that includes a first support member (22) having a drive shaft (34) fitted thereto and joined to the drive shaft in a non-rotatable fashion; a second support member (24) joined to the first support member in a non-rotatable fashion; an eccentric shaft (24a, 26a) supported by the second support member; and a linking member (26) rotatably supported by the second support member by means of the eccentric shaft and linked to a driven member (12a, 12b),
wherein the second support member joined to the first support member has two or more settable fixation positions with respect to the first support member, each fixation position being set as an angular position about an axis line (L1) of the drive shaft, and
wherein an axis line (L2) of the eccentric shaft is located at an eccentric position relative to the axis line of the drive shaft at each fixation position of the second support member with respect to the first support member, the eccentric position of the axis line of the eccentric shaft relative to the axis line of the drive shaft being different between the two or more settable fixation positions.

2. The drive-amount changing mechanism in the crank-type driver according to Claim 1, wherein at each angular position about the drive shaft for setting the corresponding fixation position, the second support member is joined to the first support member in a movable manner in a direction of eccentricity of the axis line of the eccentric shaft with respect to the axis line of the drive shaft,
wherein one of the first support member and the second support member has a pair of stoppers (24c and 24d) for stopping the movement of the second support member in the direction of eccentricity, and
wherein each fixation position is set as a state where the other one of the first support member and the second support member is abutted against at least one of the stoppers.

3. The drive-amount changing mechanism in the crank-type driver according to one of Claims 1 and 2, wherein the drive shaft is rotatably supported by a base (32) and projects from the base,
wherein the second support member and the eccentric shaft each have a through hole through which the drive shaft extends, the second support member and the eccentric shaft being disposed in a state where the drive shaft is fitted to the through holes, and
wherein the first support member is joined to the drive shaft at a location farther from the base relative to the second support member.
